# DEMANDE DE BREVET EUROPEEN

(11) **EP 1 916 024 A1**
(43) Date de publication de la demande: **30.04.2008**
(21) Numéro de dépôt: 07291261.1
(22) Date de dépôt: 16.10.2007
(51) Int. Cl.: B01D 3/38, C02F 1/20, C01B 17/16, C01C 1/10, C02F 1/04, C02F 101/16, C02F 103/36, C02F 101/10

(54) **Unité et procédé de traitement d'eaux issues de procédés de raffinage**

(30) Priorité: 19.10.2006 FR 0609173
(71) Demandeur: Total France, 92800 Puteaux (FR)
(72) Inventeur: Basset, Alexandre, 76133 Rolleville (FR)
(74) Mandataire: Largeau, Béatrice

(57) **Abrégé**

L'invention concerne une unité de traitement d'eaux de procédés de raffinage pour la séparation et l'élimination de polluants contenus dans ces eaux, et l'utilisation de ladite unité de traitement.

L'unité de traitement selon l'invention comprend au moins une unité de séparation et de concentration et un dispositif de traitement et de séparation situé en aval. L'unité de séparation et de concentration permet de réduire les débits à traiter, ce qui permet de réduire le volume du dispositif de traitement et de séparation situé en aval, et par conséquent les coûts d'investissement, sans modification majeure des installations existantes.

## Description

L'invention concerne le domaine du raffinage pétrolier et plus particulièrement celui du traitement des eaux issues des installations de raffinage qui transforment le pétrole brut en produits intermédiaires et/ou commercialisables.

Ces installations de raffinage produisent des eaux polluées, appelées eaux de procédés, qu'il est nécessaire de traiter avant qu'elles ne rejoignent l'ensemble des eaux résiduaires en aval des unités de raffinage.

En particulier, certains procédés de raffinage génèrent de l'ammoniac, ce qui pose les problèmes suivants :
- perturbation du traitement de l'hydrogène sulfuré H₂S dans les unités de production de soufre liquide (unités CLAUS),
- dépassement des normes de teneur maximale en azote dans les rejets des traitements des eaux résiduaires en aval des unités de raffinage,
- génération d'oxydes d'azotes NOₓ et d'oxydes de soufre SOₓ par élimination au moment de la combustion des gaz de strippeurs d'eaux,
- risque de corrosion et de déposition de sels minéraux sur les installations de traitement en général.

Actuellement, les eaux de procédés sont généralement traitées au moyen de strippeurs qui ont pour fonction d'éliminer les différents polluants issus des unités de raffinage et qui se retrouvent dans ces eaux de procédés, essentiellement l'H₂S et le NH₃. Cette opération dite strippage (ou stripping en anglais) revient à une extraction liquide/gaz dans une colonne utilisant comme gaz de strippage de la vapeur d'eau ou plus rarement de l'air. Cette opération est possible en raison des différences de volatilité entre NH₃ et H₂S.

Malgré des conditions de strippage opposées, le strippage de NH₃ nécessitant un pH basique tandis que le strippage de H₂S nécessite un pH acide, il est possible d'éliminer ces produits des eaux de procédés par la même opération de strippage. Toutefois, NH₃ s'avère plus difficile à éliminer que H₂S.

Par ailleurs, un débouché intéressant de cet H₂S est d'être utilisé comme réactif dans les unités de production de soufre liquide (unités CLAUS) mais la séparation de NH₃ et H₂S est souvent insuffisante, les gaz générés contenant du H₂S et du NH₃, ce qui rend leur exploitation difficile dans de telles unités. Cette solution n'est donc pas optimale. Pour y remédier, il conviendrait soit de modifier les conditions opératoires de l'unité CLAUS, soit de parfaire la séparation de l'H₂S et du NH₃, ce qui engendrerait des coûts supplémentaires.

Les strippeurs à vapeur d'eau utilisés généralement pour éliminer H₂S et NH₃ de l'eau génèrent des gaz de strippeurs d'eau (GSE). Lorsqu'ils ne sont pas exploités pour produire du soufre liquide, ces gaz GSE sont alors envoyés dans des fours ou des torches de raffinerie pour y être brûlés. Mais en sortie de certaines installations, ces gaz contiennent une forte teneur en eau ce qui entraîne une surconsommation de combustible, voire un goulottage du four, la présence d'un panache de fumée blanche extérieure dont l'impact visuel n'est pas apprécié, mais surtout des émissions de SOₓ sur lesquelles la réglementation en matière d'environnement est de plus en plus sévère.

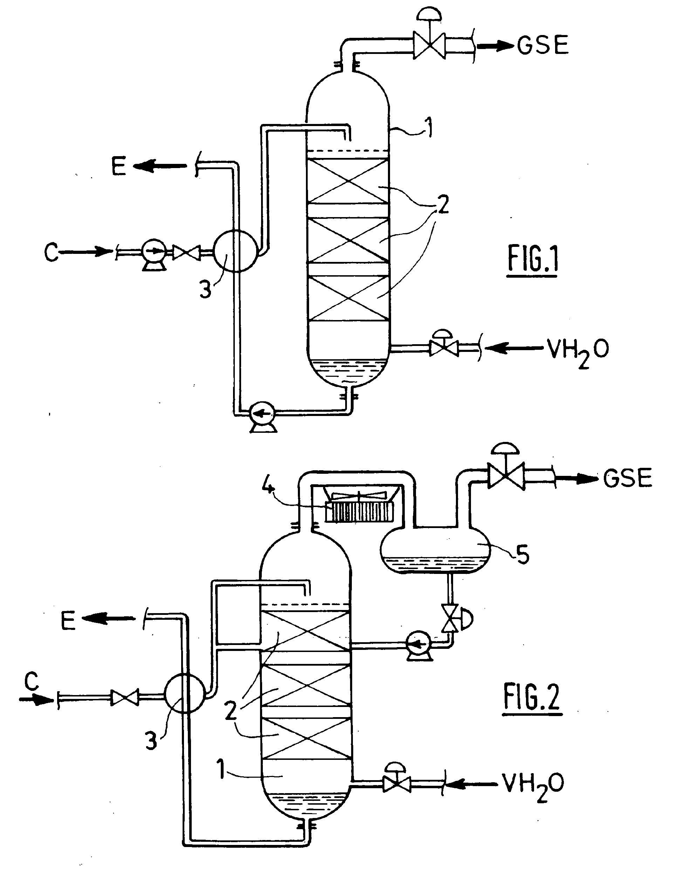

Un des moyens actuels que l'on utilise généralement pour éliminer l'H₂S et le NH₃ de l'eau est un strippeur simple du type représenté sur la figure 1.

Un tel strippeur comprend une colonne 1 contenant un garnissage.

De manière générale, pour tout type de strippeur, le garnissage peut être formé soit par des plateaux 2, tel que représenté sur la figure 1, soit par un garnissage en vrac en un ou plusieurs éléments, soit par un garnissage structuré en un ou plusieurs éléments. Le nombre d'éléments ou de plateaux est déterminé afin d'obtenir le nombre de d'étages théoriques de séparation voulu.

La charge C en eaux de procédés contenant H₂S et NH₃ est introduite en tête de la colonne 1 après avoir été chauffée par un échangeur de chaleur 3. De la vapeur d'eau V_{H2O} est introduite à la base de la colonne 1. L'effluent E soutiré en bas de la colonne 1, et sur la ligne d'évacuation duquel est placé l'échangeur 3, contient de l'eau et des traces de NH₃. En tête de colonne, sont récupérés des gaz de strippeur d'eau, dits GSE, qui contiennent environ 90% de vapeur d'eau, du NH₃ et H₂S. Leur importante teneur en eau génère les problèmes mentionnés ci-dessus lors de leur incinération.

Il s'avère ainsi inévitable que l'incinération des gaz de strippeur d'eau sous leur forme actuelle sera de moins en moins possible.

Une des solutions connues consiste à réduire le taux de vapeur d'eau contenu dans les GSE. Pour cela, il est possible d'équiper le strippeur d'un ballon de reflux. Un strippeur simple à reflux est représenté sur la figure 2. En plus des éléments déjà cités pour un strippeur simple, il comprend en aval de la tête du strippeur, un système aéroréfrigérant 4 suivi d'un ballon de reflux 5. L'aéroréfrigérant condense partiellement, dans le ballon de reflux, les GSE générés par la tête de la colonne 1, le liquide condensé étant renvoyé en tête de la colonne. Cette condensation partielle permet de réduire le débit de vapeur sortant du ballon de reflux à quelques centaines kg/h et d'abaisser à 30% environ la teneur en eau du gaz. Dans ces conditions, l'incinération des GSE est moins problématique, et l'utilisation de ces gaz dans les unités de production de soufre liquide est envisageable.

Toutefois, en raison du renvoi dans la colonne du reflux, il est nécessaire d'augmenter le nombre de d'étages théoriques de séparation de la colonne, et d'augmenter le taux de strippage, c'est-à-dire la quantité de vapeur introduite (en kg) pour traiter une tonne de charge.

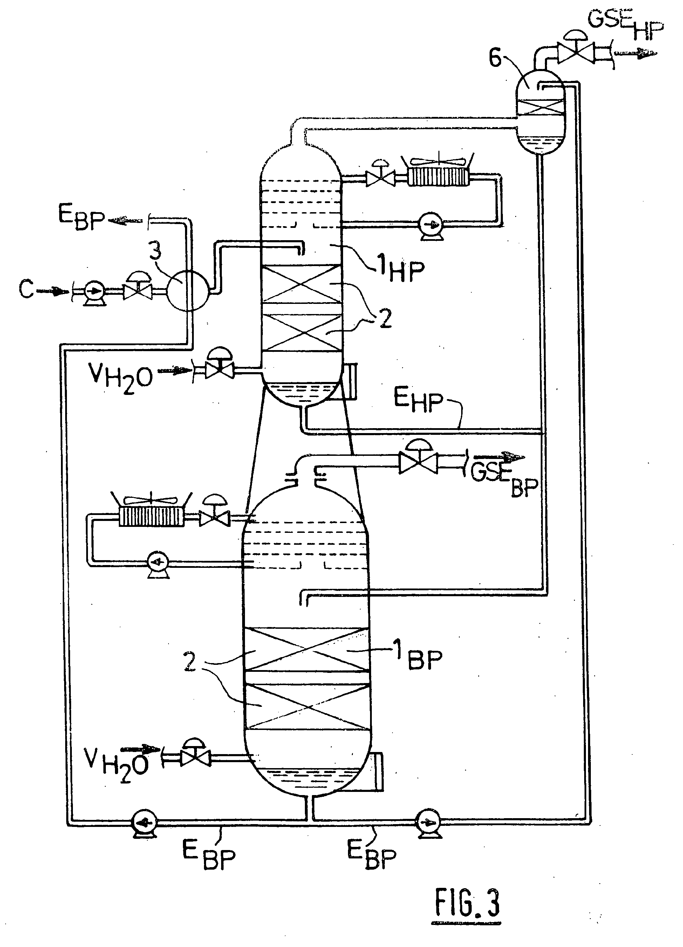

Une autre solution consiste à utiliser des strippeurs doubles étages, qui permettent de séparer H₂S de NH₃ par deux étapes de strippage. Une telle installation est représentée sur la figure 3. Elle comprend un premier strippeur formée d'une première colonne 1_{HP}, pourvue de plateaux 2, formant un premier étage fonctionnant à haute pression (environ 9 bars) et à une température de tête de l'ordre de 80°C, ce qui favorise le strippage de H₂S. Le gaz de tête GSE_{HP} généré par la première colonne 1_{HP} est riche en H₂S (<98% de H₂S) et contient peu de NH₃ qui peut être éliminé par lavage au moyen d'un dispositif de lavage 6. Ce gaz de tête GSE_{HP}, après lavage, peut alors être envoyé aux unités de production de soufre. L'effluent E_{HP} soutiré de la première colonne 1_{HP}, ainsi que la phase liquide provenant du lavage par le dispositif de lavage 6, est envoyé vers une deuxième colonne 1_{BP} basse pression, par exemple un strippeur à reflux tel que décrit en référence à la figure 2, formant un deuxième étage, pour le strippage de NH₃. Le gaz de tête GSE_{BP} généré par cette deuxième colonne est majoritairement composé de NH₃ et peut être incinéré dans un four de raffinerie. Selon les conditions d'injection et de marche du four d'incinération, NH₃ participe avantageusement à la réduction de la teneur en NOₓ. En effet, le NH₃ contenu dans les gaz de tête GSE_{BP} réagit à une température généralement inférieure à 900°C avec NOₓ suivant la réaction :

NH₃ + NOₓ ⇔ N₂ + H₂O.

L'effluent E_{BP}, constitué essentiellement d'eau avec des traces de NH₃, sortant de la deuxième colonne est renvoyé en partie au dispositif de lavage 6. L'effluent sortant E_{BP} est également utilisé pour réchauffer la charge introduite dans la première colonne 1_{HP} au niveau d'un échangeur de chaleur 3.

Une telle installation à double étage formée de deux strippeurs peut parfois être très coûteuse à réaliser dans le cas où ces deux strippeurs sont distants l'un de l'autre et nécessitent de grandes dimensions pour pouvoir traiter des quantités de flux importantes.

Il existe également des installations appelées double-strippeur (non représentées) comprenant deux colonnes montées en série l'une au dessus de l'autre qui permettent de stripper avec une seule injection de vapeur deux flux d'eaux différents. Toutefois, leur mise en oeuvre s'avère délicate pour l'obtention d'un strippage efficace dans le strippeur supérieur, et elles ne peuvent fonctionner qu'avec des eaux de procédés faiblement chargées en H₂S et NH₃.

Il existe donc un besoin d'une unité de traitement des eaux de procédés qui permette à moindre coût de séparer NH₃ de H₂S dans des eaux de procédés plus ou moins chargées en H₂S et NH₃ pour obtenir notamment des gaz de strippeur d'eau qui soient exploitables, en particulier qui permettent l'envoi de l'H₂S séparé vers les unités CLAUS.

Il existe des solutions permettant d'exploiter les gaz de strippeur et de les envoyer vers les unités CLAUS.

Une solution consiste à effectuer un lavage acide des GSE sortant d'un strippeur permettant de récupérer l'ammoniac en solution et de purifier les GSE. Une telle solution nécessite toutefois le stockage et la consommation d'acide sulfurique pour le lavage.

Une autre solution consiste à combiner strippage et extraction liquide/liquide. L'eau à traiter passe dans un strippeur d'eau, ce qui élimine une partie des gaz acides et fait augmenter le pH. Ensuite, l'eau partiellement strippée est envoyée dans un extracteur dans lequel l'ammoniac est éliminé, ce qui fait diminuer le pH. L'eau est alors renvoyée dans le strippeur pour continuer l'élimination des gaz acides. Ce strippage/extraction peut être répété autant de fois que nécessaire. Ce procédé nécessite toutefois l'utilisation de quantités importantes de solvant, qui doit être régénéré. Par ailleurs, il est difficile de trouver un solvant peu coûteux, facilement disponible et présentant les propriétés requises.

L'invention vise à pallier ces inconvénients en proposant une unité de traitement comprenant une unité de séparation et de concentration des polluants contenus dans les eaux de procédés de raffinage, notamment pour la séparation et l'élimination de H₂S et NH₃ qui soit économique et permette notamment de réduire les débits à traiter, d'où une réduction des coûts d'investissement du traitement en aval de l'unité de séparation et de concentration, sans modification majeure des installations existantes.

Le premier flux en sortie d'une telle unité de séparation et de concentration est un concentrat présentant une concentration plus élevée en polluants. Lorsque les polluants sont NH₃ et H₂S, la séparation en aval de ces deux gaz au moyen d'un strippeur en sera facilitée et le taux de strippage sera moindre. Ensuite, le H₂S obtenu après séparation en sortie de l'unité de traitement, pourra être envoyé à l'unité CLAUS de manière beaucoup plus optimale que dans l'art antérieur, puisque sa quantité sera plus importante et qu'il ne sera pas pollué par le NH₃. Le second flux en sortie de l'unité de séparation et de concentration contient les gaz GSE résiduels qui seront envoyés dans les fours d'incinération. Là encore, cela se fait de manière plus optimale que dans l'art antérieur puisque leur quantité est moindre et qu'ils sont également moins chargés en eau. De ce fait, leur combustion provoque moins de surchauffe, donc moins de surconsommation de combustible et elle génère moins de SOₓ.

A cet effet, l'objet de l'invention concerne une unité de traitement d'eaux de procédés de raffinage pour la séparation et l'élimination de polluants, comprenant au moins une unité de séparation et de concentration des polluants contenus dans les eaux de procédés de raffinage et un strippeur pour le traitement du condensat issu de ladite unité de séparation et de concentration,
ladite unité de séparation et de concentration des polluants comprenant au moins :
- un moyen d'extraction liquide/gaz des polluants,
- une conduite d'amenée desdites eaux de procédés en tête dudit moyen d'extraction,
- une conduite d'amenée du gaz d'extraction dans le fond dudit moyen d'extraction,
- une conduite de soutirage de l'effluent recueilli en sortie dudit moyen d'extraction,
- une conduite d'évacuation des gaz générés en tête dudit moyen d'extraction,
- un ballon de condensation (18) apte à récupérer le condensat formé par lesdits gaz générés en tête dudit moyen d'extraction, et les gaz résiduels non condensés, et
- un système de refroidissement (17) sur ladite conduite d'évacuation (16) des gaz générés, entre ledit moyen d'extraction (12) et ledit ballon de condensation (18),
caractérisée en ce que le moyen d'extraction (12) liquide/gaz, le système de refroidissement (17) et le ballon de condensation (18) sont conçus de manière à obtenir un débit de condensat de 0,1 à 0,25 fois le débit de la charge en eaux de procédés, de préférence de 0,1 fois.

On obtient ainsi des débits plus faibles à traiter en sortie de l'unité de séparation et de concentration, il est ainsi possible de réduire le dimensionnement du dispositif de traitement et de séparation, ou strippeur, placé en aval, ce qui représente un avantage indéniable en raffinage, notamment en terme de coût, notamment par la réutilisation et la modification d'unités existantes.

Avantageusement, l'unité de séparation et de concentration consiste en une unité de séparation et de concentration de NH₃ et H₂S contenus dans les eaux de procédés.

De préférence, le moyen d'extraction liquide/gaz de l'unité de séparation et de concentration est une colonne de strippage.

L'unité de séparation et de concentration peut ainsi être réalisée sans modification majeure des strippeurs connus existant ou construits spécifiquement pour cet usage.

Dans le cas de strippeurs simples, il suffit de rajouter un ballon de condensation et un système de refroidissement.

Dans le cas de strippeurs à reflux, il suffit de détourner le liquide sortant du ballon de reflux pour le renvoyer, non pas vers le strippeur, mais vers un dispositif de traitement et de séparation, constitué par un strippeur supplémentaire de conception classique, et d'augmenter la capacité d'échange thermique de l'aéroréfrigérant. Le ballon de reflux devient alors un ballon de condensation au sens de l'invention, et l'aéroréfrigérant constitue un système de refroidissement au sens de l'invention.

Avantageusement, le système de refroidissement de l'unité de séparation et de concentration est un système de réfrigération, de préférence un aéroréfrigérant, utilisant de l'air pour refroidir. Ce système de refroidissement sera conçu en fonction des conditions de fonctionnement du moyen d'extraction afin d'obtenir une condensation suffisante des gaz générés en tête du moyen d'extraction.

Avantageusement, le moyen d'extraction liquide/gaz, le système de refroidissement et le ballon de condensation de l'unité de séparation et de concentration sont conçus de manière à obtenir un débit de condensat de 0,1 à 0,25 fois le débit de la charge en eaux de procédés, de préférence de 0,1.

Il est ainsi possible de réduire le dimensionnement du dispositif de traitement et de séparation distinct placé en aval de l'unité de séparation et de concentration d'un facteur 10 par rapport aux dispositifs habituellement utilisés, permettant ainsi de réduire de manière substantielle le coût d'investissement et de fonctionnement d'un tel dispositif.

Avantageusement, l'unité de séparation et de concentration comprend en tête du système de refroidissement un dispositif de lavage destiné à éviter la formation de sulfures d'ammonium.

La conception du moyen d'extraction liquide/gaz de l'unité de séparation et de concentration sera déterminée en fonction de la qualité des eaux de procédés à traiter.

Par exemple, une colonne de strippage d'une unité de séparation et de concentration comprendra généralement de 3 à 15 étages théoriques, de préférence de 8 à 10 étages théoriques. L'efficacité du strippage augmentant avec le nombre d'étages théoriques, ce dernier sera par exemple choisi de manière à obtenir un compromis entre l'efficacité du strippage et le coût de l'unité, ce coût augmentant également avec le nombre d'étages théoriques.

Dès lors que le nombre d'étages théoriques est déterminé, l'efficacité du strippage, et de l'unité de séparation et de concentration sera fonction des paramètres suivants, par ordre d'importance décroissant, à savoir, le taux de strippage, la différence de température entre la tête de colonne et le ballon de condensation, et la pression dans la colonne.

Une bonne efficacité de strippage pourra être obtenue pour un taux de strippage supérieur à 10%, de préférence supérieur à 15%.

La différence de température et la pression seront explicitées plus loin.

L'invention concerne également une unité de traitement d'eaux de procédés de raffinage pour la séparation et l'élimination de H₂S et NH₃ comprenant au moins une unité de séparation et de concentration, et un strippeur pour le traitement du condensat issu de ladite unité de séparation et de concentration.

Avantageusement, ledit strippeur est dimensionné de manière à traiter un débit de condensat de l'ordre de 10 % à 25% du débit de la charge initiale en eaux de procédés à traiter. Par charge initiale, on entend la charge introduite dans la ou les unités de séparation et de concentration.

On pourra choisir ce deuxième strippeur parmi les strippeurs simples, les strippeurs à reflux, les strippeurs doubles, les strippeurs à double étage.

En particulier, l'utilisation d'un strippeur haute pression à reflux, permet d'obtenir des gaz de tête très riches en H₂S (de l'ordre de 99% en masse) qui peuvent être directement dirigés vers une unité de production du soufre liquide, tandis que l'effluent obtenu est riche en NH₃ et peut être stocké en vue d'une exploitation ultérieure.

L'invention concerne également l'utilisation d'une unité de traitement, dans laquelle l'unité de séparation et de concentration concentre des eaux de procédés de raffinage contenant NH₃ et H₂S.

Avantageusement, une telle unité de traitement est utilisée lorsque l'unité de séparation et de concentration concentre des eaux de procédés de raffinage contenant de quelques centaines de ppm à quelques pourcents en masse de NH₃ et/ou de H₂S.

De préférence, dans l'unité de séparation et de concentration, la différence de température entre la tête du moyen d'extraction liquide/gaz et le ballon de condensation est déterminée en fonction du rapport H₂S/NH₃ de manière à condenser la quasi totalité du gaz généré en tête dudit moyen d'extraction, de préférence 99,9 % en masse.

Par ailleurs, en fonction du rapport H₂S/NH₃, la détermination de différence de température dépendra de divers paramètres tels que la température du ballon de condensation, le taux de gaz d'extraction (généralement de la vapeur) introduit dans le moyen d'extraction, le nombre d'étages théoriques de ce dernier, ... En effet, la température de la tête du moyen d'extraction est conditionnée par la qualité de la charge, mais également par la pression dans ledit moyen d'extraction.

Le rapport H₂S/NH₃ varie souvent de 1 à 2,5 environ. En règle générale, plus ce rapport est élevé, plus la différence de température devra être grande pour obtenir le taux de condensation voulu.

La pression dans le moyen d'extraction liquide/gaz de l'unité de séparation et de concentration est choisie et régulée, et la température est quant à elle déterminée par l'équilibre liquide/vapeur qui s'établit dans ledit moyen d'extraction. Pour des raisons de sécurité et d'économie d'énergie, il est préférable que cette pression soit la plus basse possible, la température de tête du moyen d'extraction étant alors également basse. Dans ce cas, la différence de température sera également plus faible que dans le cas d'une pression plus importante dans le moyen d'extraction.

Avantageusement, dans l'unité de séparation et de concentration, la différence de température entre la tête du moyen d'extraction et le ballon de condensation est supérieure à 35°C, de préférence supérieure à 50°C.

Cette différence de température pourra être adaptée en fonction du ratio H₂S/NH₃, notamment en agissant sur la température du ballon de condensation, et/ou sur les conditions d'équilibre liquide/vapeur dans le moyen d'extraction liquide/gaz.

La température de la charge entrant dans le moyen d'extraction est généralement de l'ordre de 40°C jusqu'à la température d'ébullition du mélange, de préférence de l'ordre de 90°C. Cette température sera adaptée en fonction de la pression de vapeur dans le moyen d'extraction, la pression en tête du moyen d'extraction étant généralement de l'ordre de 1 à 3 bars, de préférence de 2 bars.

De préférence, on introduit dans l'unité de séparation et de concentration un taux massique de la quantité de gaz d'extraction sur la quantité de charge en eaux de procédés à traiter supérieur à 10%, de préférence supérieur à 15%.

L'invention est maintenant décrite en référence aux dessins annexés, non limitatifs, dans lesquels :
- la figure 1 est une représentation schématique d'un strippeur simple faisant partie de l'état de la technique ;
- la figure 2 est une représentation schématique d'un strippeur simple à reflux faisant partie de l'état de la technique ;
- la figure 3 est une représentation schématique d'un strippeur à double étage ;
- la figure 4 est une représentation schématique d'une unité de séparation et de concentration des polluants contenus dans des eaux de procédés, selon l'invention ;
- La figure 5 est une représentation schématique d'une unité de traitement d'eaux de procédés selon l'invention.

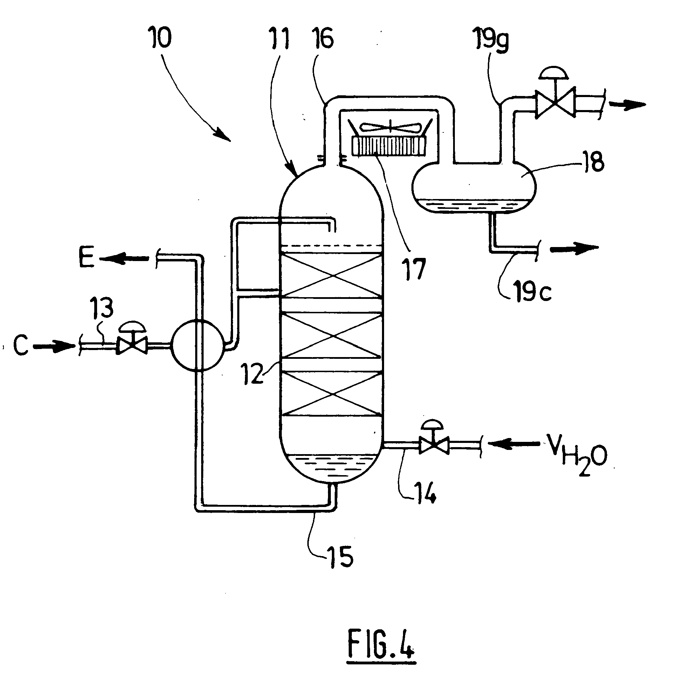

La figure 4 représente une unité 10 de séparation et de concentration des polluants contenus dans des eaux de procédé de raffinage destinée à leur traitement pour la séparation et l'élimination de H₂S et NH₃.

Cette unité 10 comprend un moyen d'extraction liquide/gaz 11 comprenant une colonne de strippage 12 pourvue d'une conduite 13 d'amenée de la charge C d'eaux de procédés en tête de la colonne, d'une conduite 14 d'amenée du gaz de strippage dans le fond de la colonne pour le traitement de la charge.

La colonne de strippage 12 est également pourvue d'une conduite 15 de soutirage de l'effluent E traité, et, d'une conduite 16 d'évacuation des gaz générés en tête de la colonne.

L'unité 10 comprend en outre, sur la conduite 16 d'évacuation des gaz générés en tête de la colonne, un système de refroidissement 17 apte à condenser lesdits gaz générés en tête de la colonne. Dans l'exemple, il s'agit d'un aéroréfrigérant 17. En aval de l'aéroréfrigérant 17, un ballon de condensation 18 récupère le condensat formé par les dits gaz générés en tête de la colonne condensés, et les gaz résiduels non condensés.

A cet effet, le ballon de condensation 18 comprend une conduite 19c d'évacuation du condensat destinée à acheminer ledit condensat vers un dispositif de traitement et de séparation pour la séparation et l'élimination de H₂S et NH₃, et une conduite 19g d'évacuation des gaz résiduels destinée à acheminer lesdits gaz résiduel vers une unité de traitement adaptée.

Le moyen d'extraction liquide/gaz 11, le système de refroidissement 17 et le ballon de condensation 18 sont conçus de manière à obtenir un débit de condensat de 0,1 à 0,25 fois le débit de la charge, de préférence de 0,1.

Ce débit de condensat est conditionné notamment par la concentration en NH₃ et H₂S et le taux de strippage.

Avantageusement, on disposera en tête de l'aéroréfrigérant un dispositif de lavage, non représenté sur la figure 4, permettant d'éviter la formation éventuelle de sulfures d'ammonium dans l'aeroréfrigérant et dans les lignes situées en aval de l'aéroréfrigérant. Il s'agit par exemple d'un système d'injection d'eau à débit suffisant pour éviter les dépositions de sulfure d'ammonium dans le système de refroidissement et les lignes situées en aval.

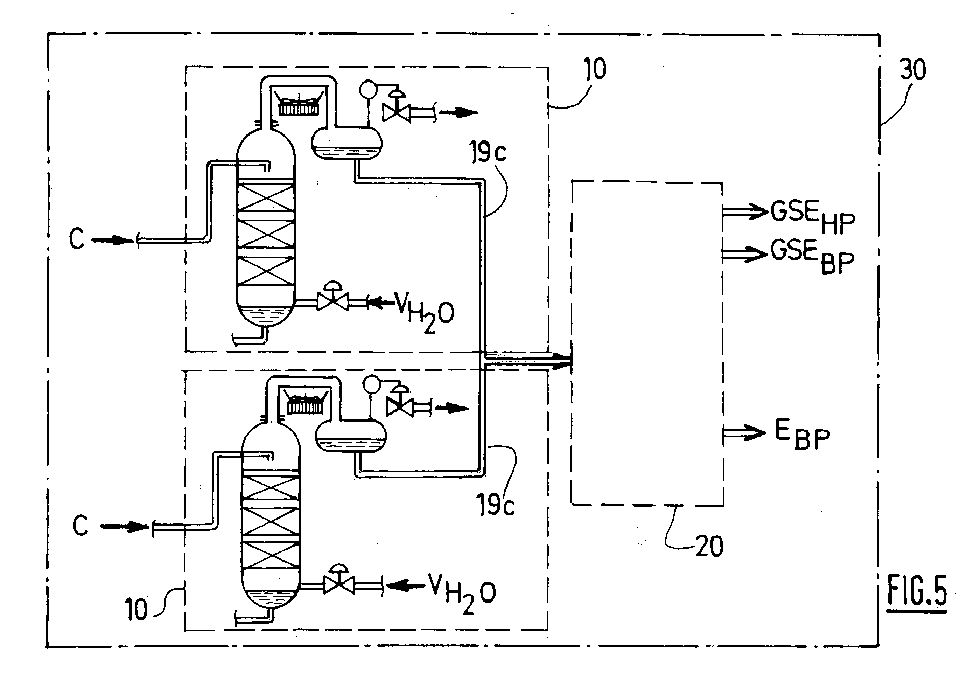

La figure 5 représente un exemple d'unité de traitement 30 selon l'invention utilisant deux unités de séparation et de concentration 10 telles que décrites ci-dessus et un strippeur double étage 20 (dispositif de traitement et de séparation) pour le traitement du condensat issu des unités de séparation et de concentration.

Le strippeur à deux étages 20 est tel que celui décrit en référence à la figure 3, dont les références sont reprises ci-après.

Les conduites 19c d'évacuation du condensat des deux unités 10 de séparation et de concentration sont chargées en tête de la première colonne 1_{HP} de ce strippeur double étage 20 et traitées par la vapeur d'eau V_{H2O} introduite dans le fond de la colonne 1_{HP} (voir figure 3).

En raison des teneurs élevées en H₂S et NH₃ de ces condensats, on obtient une meilleure efficacité du strippage.

Le gaz de strippeur d'eau GSE_{HP} généré en tête de la colonne 1_{HP} du strippeur double étage 20 sont riches en H₂S et peuvent être directement exploités, par exemple dans une unité de production du soufre liquide, telle qu'une unité dite CLAUS.

L'effluent E_{BP} soutiré de la deuxième colonne 1_{BP} du strippeur double étage 20 est riche en NH₃, et peut être utilisé en vue d'une élimination ou exploitation ultérieure.

Les exemples suivants montrent l'efficacité d'une unité de séparation et de concentration, selon l'invention.

### Exemple 1 (référence strippeur simple)

Dans cet exemple, qui sert de référence, on a traité une charge d'eaux de procédés dans un strippeur simple (basse pression) à reflux du type de celui représenté sur la figure 2.

Les conditions de fonctionnement de ce strippeur sont présentées dans le tableau 1.

**Tableau 1 : conditions de fonctionnement d'un strippeur simple à reflux :**

| | |
|---|---|
| Nombre d'étages théoriques d'extraction | 8 |
| Pression en tête | 0,9 bar (colonne), 1 bar (ballon) |
| Température en tête | 116°C |
| Température du ballon | 95°C |
| Delta T colonne/ballon | 21°C |
| Température de la charge | 90°C |
| Taux de strippage | 20 % massique |

Le tableau 2 indique les débits et qualités des flux sortant du strippeur simple à reflux dans les conditions du tableau 1.

**Tableau 2 : flux d'un strippeur simple à reflux**

| | charge | effluent | GSE | reflux |
|---|---|---|---|---|
| Débit | 30 t/h | 35,6 t/h | 0,434 t/h | 3,9 t/h |
| H₂S | 5000 mg/l | 0 mg/l | 33% | 38400 mg/l |
| NH₃ | 4000 mg/l | 72 mg/l | 27,0% | 62700 mg/l |
| H₂O | 99,0 % | 100 % | 33,8 % | 89,4 % |
| Autres * | 950 mg/l | -- | 4,7% | -- |

| | | | | |
|---|---|---|---|---|
| *Autres : phénols, CO₂, HCN, HSCN, Acide Acétique, HC) | | | | |

Les pourcentages indiqués sont des pourcentages massiques.

### Exemple 2 (référence double strippeur)

Dans cet exemple, qui sert également de référence, on a traité la même charge d'eaux de procédés dans un strippeur double étage du type de celui représenté sur la figure 3.

Les conditions de fonctionnement de ce strippeur sont présentées dans le tableau 3.

**Tableau 3 : conditions de fonctionnement du strippeur double étage 20**

| | Colonne HP | Colonne BP |
|---|---|---|
| Nombre d'étages théoriques d'extraction | 14 | 10 |
| Pression en tête | 8,9 bars relatifs | 1 bar relatif |
| Température en tête | 85°C | 95°c |
| Température de la charge | 120°C | 110°C |
| Taux de strippage (% massique) | 18 % | 19,4 % |

Le tableau 4 indique les débits et qualités des flux sortant du strippeur double dans les conditions du tableau 3.

**Tableau 4 : flux du strippeur à double étage**

| | charge | Effluent (E_{BP}) | GSE_{HP} | GSE_{BP} |
|---|---|---|---|---|
| Débit | 30 t/h | 42 t/h | 0,146 t/h | 0,225 t/h |
| H₂S | 5000 mg/l | 0 mg/l | 89,7% | 8,4% |
| NH₃ | 4000 mg/l | 33 mg/l | 0 % | 53% |
| H₂O | 99,0 % | 100 % | 0,6 % | 37,7 % |
| Autres * | 950 mg/l | -- | 9,5 % (CO₂) | -- |

| | | | | |
|---|---|---|---|---|
| *Autres : phénols, CO₂ HCN, HSCN, Acide Acétique, HC) | | | | |

Les pourcentages indiqués sont des pourcentages massiques.

### Exemple 3 :

Dans cet exemple, la même charge d'eaux de procédés que celle utilisée dans les exemples 1 et 2 de référence a été concentrée par une unité de séparation et de concentration, selon l'invention, telle que représentée figure 4.

Les conditions de fonctionnement de cette unité sont présentées dans le tableau 5.

**Tableau 5 : conditions de fonctionnement de l'unité de séparation et de concentration :**

| | |
|---|---|
| Nombre d'étages théoriques d'extraction | 8 |
| Pression en tête | 0,9 bar (colonne), 1 bar (ballon) |
| Température en tête | 119°C |
| Température du ballon | 79°C |
| Delta T colonne/ballon | 40°C |
| Température de la charge | 90°C |
| Taux de strippage | 20 % massique |

Le tableau 6 donne les débits et qualités des flux de l'unité de séparation et de concentration dans les conditions du tableau 5.

**Tableau 6 : flux d'une unité de séparation et de concentration, selon l'invention**

| | charge | effluent | Gaz résiduels | condensat |
|---|---|---|---|---|
| Débit | 30 t/h | 31,5 t/h | 4,5 kg/h | 4,45 t/h |
| H₂S | 5000 mg/l | 0 mg/l | 32 % | 33400 mg/l |
| NH₃ | 4000 mg/l | 30 mg/l | 1,6 % | 26700mg/l |
| H₂O | 99,2 % | 100% | 9,4 % | 91% |
| Autres * | 950 mg/l | -- | 57 % | -- |

| | | | | |
|---|---|---|---|---|
| *Autres : phénols, CO₂, HCN, HSCN, Acide Acétique, HC) | | | | |

Les pourcentages indiqués sont des pourcentages massiques.

Ainsi pour une charge identique, l'unité de séparation et de concentration, selon l'invention, permet, par rapport au strippeur simple de l'exemple 1, d'améliorer la qualité de l'effluent en diminuant sa teneur en NH₃, de réduire la quantité de gaz émis en tête de colonne, et de diminuer d'un facteur d'environ 6 le flux à traiter en sortie du ballon de condensation 18.

### Exemple 4

Dans cette exemple, la même charge d'eaux de procédés que celle utilisée pour les exemples 1 à 3 a été traitée dans une unité de traitement selon l'invention telle que celle représentée figure 5.

Chacune des unités de séparation et de concentration 10 de cette unité de traitement traite un débit d'eaux de procédés de 30t/h, le débit en entrée du strippeur double étage 20 étant alors de 2 fois 4,45 t/h.

Les conditions de fonctionnement du strippeur double étage 20 sont reportées dans le tableau 7. Ces conditions sont identiques à celles de l'exemple 2.

**Tableau 7 : conditions de fonctionnement du strippeur double étage 20**

| | Colonne HP | Colonne BP |
|---|---|---|
| Nombre d'étages théoriques d'extraction | 14 | 10 |
| Pression en tête | 8,9 bars relatifs | 1 bar relatif |
| Température en tête | 85°C | 95°c |
| Température de la charge | 120°C | 110°C |
| Taux de strippage (% massique) | 18 % | 19,4% |

On obtient alors les résultats présentés dans le tableau 8 pour les flux entrant et sortant du strippeur à double étage 20.

**Tableau 8 : flux du strippeur à double étage 20**

| | charge | Effluent (E_{BP}) | GSE_{HP} | GSE_{BP} |
|---|---|---|---|---|
| Débit | 8,9 t/h | 11,7 t/h | 0,309 t/h | 0,44 t/h |
| H₂S | 33367 mg/l | 0 mg/l | 95 % | 7 % |
| NH₃ | 26729 mg/l | 35 mg/l | 0,2 % | 54 % |
| H₂O | 93,6 % | 100 % | 4,8 % | 38 % |

Les dimensions du strippeur double étage, utilisé dans l'unité de traitement selon l'invention, sont réduites en raison du flux plus faible à traiter, de sorte que son coût sera réduit, et qu'il peut être placé dans des lieux de plus faible dimension par rapport à un strippeur double étage utilisé de manière habituelle (exemple 2).

## Revendications

1. Unité de traitement d'eaux de procédés de raffinage pour la séparation et l'élimination de polluants, comprenant au moins une unité de séparation et de concentration (10) des polluants contenus dans les eaux de procédés de raffinage et un strippeur (20) pour le traitement du condensat issu de ladite unité de séparation et de concentration (10),
ladite unité de séparation et de concentration (10) des polluants comprenant au moins :
- un moyen d'extraction (12) liquide/gaz des polluants,
- une conduite d'amenée (13) desdites eaux de procédés en tête dudit moyen d'extraction,
- une conduite d'amenée (14) du gaz d'extraction dans le fond dudit moyen d'extraction,
- une conduite de soutirage (15) de l'effluent recueilli en sortie dudit moyen d'extraction,
- une conduite d'évacuation (16) des gaz générés en tête dudit moyen d'extraction,
- un ballon de condensation (18) apte à récupérer le condensat formé par lesdits gaz générés en tête dudit moyen d'extraction, et les gaz résiduels non condensés, et
- un système de refroidissement (17) sur ladite conduite d'évacuation (16) des gaz générés, entre ledit moyen d'extraction (12) et ledit ballon de condensation (18),
**caractérisée en ce que** le moyen d'extraction (12) liquide/gaz, le système de refroidissement (17) et le ballon de condensation (18) sont conçus de manière à obtenir un débit de condensat de 0,1 à 0,25 fois le débit de la charge en eaux de procédés.

2. Unité de traitement selon la revendication 1, **caractérisée en ce que** le moyen d'extraction (12) liquide/gaz, le système de refroidissement (17) et le ballon de condensation (18) sont conçus de manière à obtenir un débit de condensat de 0,1 fois le débit de la charge en eaux de procédés.

3. Unité de traitement selon l'une des revendications 1 ou 2, **caractérisée en ce que** le moyen d'extraction (12) liquide/gaz de l'unité de séparation et de concentration est une colonne de strippage.

4. Unité de traitement selon l'une des revendications 1 à 3, **caractérisée en ce que** le système de refroidissement (17) de l'unité de séparation et de concentration est un système de réfrigération.

5. Unité de traitement selon la revendication 4, **caractérisée en ce que** le système de réfrigération est un aéroréfrigérant.

6. Unité de traitement selon l'une des revendications 1 à 5, dans laquelle l'unité de séparation et de concentration comprend en tête du système de refroidissement (17), un dispositif de lavage destiné à éviter la formation de sulfures d'ammonium.

7. Unité de traitement selon l'une des revendications 1 à 6, dans laquelle ledit strippeur (20) est dimensionné de manière à traiter un débit de condensat de l'ordre de 10 % à 25% du débit de la charge initiale en eaux de procédés à traiter.

8. Unité de traitement selon l'une des revendications 1 à 7, dans laquelle le strippeur (20) est choisi parmi les strippeurs simples, les strippeurs à reflux, les strippeurs doubles, les strippeurs à double étage.

9. Utilisation d'une unité de traitement selon l'une des revendications 1 à 8, dans laquelle l'unité de séparation et de concentration (10) concentre des eaux de procédés de raffinage contenant de quelques ppm à quelques pourcents en poids de NH₃ et/ou de H₂S.

10. Utilisation d'une unité de traitement selon la revendication 9, dans laquelle, dans l'unité de séparation et de concentration (10), la différence de température entre la tête du moyen d'extraction liquide/gaz et le ballon de condensation est déterminée en fonction du rapport H₂S/NH₃ de manière à condenser la quasi-totalité du gaz généré en tête dudit moyen d'extraction, de préférence 99,9 % en masse du gaz.

11. Utilisation d'une unité de traitement selon la revendication 10, dans laquelle, dans l'unité de séparation et de concentration (10), la différence de température entre la tête du moyen d'extraction liquide/gaz et le ballon de condensation est supérieure à 35°C, de préférence supérieure à 50°C.

12. Utilisation d'une unité de traitement selon l'une des revendications 1 à 8, dans laquelle on introduit dans l'unité de séparation et de concentration (10), un taux massique de la quantité de gaz d'extraction sur la quantité de charge en eaux de procédés à traiter supérieur à 10%, de préférence supérieur à 15%.
